# EUROPÄISCHE PATENTANMELDUNG

(11) **EP 1 647 442 A2**
(43) Veröffentlichungstag der Anmeldung: **19.04.2006**
(21) Anmeldenummer: 05018130.4
(22) Anmeldetag: 20.08.2005
(51) Int. Cl.: B60N 2/68, B60R 5/00

(54) **Sitz für ein Kraftfahrzeug**

(30) Priorität: 14.10.2004 DE 102004049928
(71) Anmelder: Dr.Ing. h.c.F. Porsche Aktiengesellschaft, 70435 Stuttgart (DE)
(72) Erfinder: Beierl, Dominik, 70825 Korntal-Muenchingen (DE); Müller, Joachim, 71277 Rutesheim (DE); Feeser, Klaus, 71665 Vaihingen/Enz (DE); Thoma, Jörg, 74722 Buchen (DE)

(57) **Zusammenfassung**

Dieser Sitz besteht aus einer Sitzlehne und einem Sitzunterteil, die mit einem gewichtserleichterten Tragrahmen bzw. einer Trägerstruktur verbunden sind. In der Sitzlehne ist hierzu ein aus einem Strangpressprofil bestehender U-förmiger Tragrahmen vorgesehen, der mit einer Endstrebe und einer Mittenstrebe versteift ist. Mit diesem Tragrahmen sind Anbauteile in einfacher Weise verbindbar. Das Sitzunterteil weist eine eingebettete Trägerstruktur aus Profilen auf, die miteinander verbunden sind und ein versteifendes Element im Schaumelement des Sitzunterteils bilden.

## Beschreibung

Die Erfindung bezieht sich auf einen Sitz für ein Kraftfahrzeug nach dem Oberbegriff des Patentanspruchs 1.

Aus der US 6,347,836 B1 ist ein Fahrzeugsitz mit einem in einer Sitzlehne angeordneten Tragrahmen aus Profilstreben bekannt, die untereinander verbunden und auf einer Lehnenplatte gehalten bzw. befestigbar sind.

Aufgabe der Erfindung ist es, einen Sitz bzw. eine Sitzlehne und ein Sitzunterteil für ein Kraftfahrzeug mit einer verbesserten Rahmenstruktur zu schaffen, die in einfacher Weise herstellbar bzw. integrierbar und leichtbauend ausgeführt ist und Anbauteile, wie beispielsweise Verriegelungen, Gurtumlenkelemente, Lager und dgl. in einfacher Montageweise ansetzbar sind.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass durch die Bauweise des Tragrahmens aus einem Strangpressprofil mit der Anbindung an einem Lehnenstützblech und einer Verstärkung über zwei Streben eine Baueinheit geschaffen wird, die hinsichtlich der Verwendung mit einem Gewicht entsprechend den Festigkeitsanforderungen gestaltet werden kann. Ferner sind die einzelnen Teile des Tragrahmens sowie die Anbauteile nach dem Baukastenprinzip gestaltet. Der Zusammenbau der Sitzlehne ist in einfacher Montageweise möglich und bildet eine Vormontageeinheit.

Dies wird erreicht, indem die Sitzlehne aus einem U-förmigen Tragrahmen mit einem Lehnenstützblech besteht und der Tragrahmen ein Strangpressprofil gleichen Querschnitts mit einer Ober- und Untergurtstrebe sowie an einer Stirnseite eine verbindende Steggurtstrebe umfasst. Die freien beabstandeten Enden der Gurtstreben sind mit einer äußeren Profilstrebe kleineren Querschnitts als der Tragrahmen verbunden. Zwischen der Steggurtstrebe und der Profilstrebe ist eine Mittenstrebe angeordnet.

Des Weiteren ist das Lehnenstützblech am Profil des Tragrahmens anliegend und mit diesem verschraubt, wobei das Lehnenstützblech Einprägungen aufweist und eine Durchladeöffnung besitzt, die sich etwa zwischen der Mittenstrebe und der äußeren Profilstrebe angeordnet und von dieser begrenzt ist. Durch diese Ausbildung wird eine stabile Sitzlehne geschaffen, die unmittelbar durch das Lehnenstützblech festigkeitsmäßig verstärkt ist. Um eine gewichtsmäßig leichte Sitzlehne zu erzielen, kann das Lehnenstützblech aus einem Leichtmetall bestehen, wie auch der Lehnenrahmen insgesamt.

Mit dem Tragrahmen sind Anbauteile verbunden, die aus Verriegelungsaufnahmen, Aufnahmen für Haltestangen von Kopfstützen und Gurtumlenkbügeln bestehen, welche am Tragrahmen befestigbar sind, wobei die Verriegelungsaufnahmen aus einem Strangpressprofil bestehen und an mindestens einer ausgerundeten Ecke des Tragrahmens mit einer entsprechend korrespondierenden Ausrundung angesetzt ist und Schenkel der Verriegelungsaufnahmen das Profil des Tragrahmens von außen haltend übergreifen. Die Anbauteile können Bausatzteile ebenso wie der Tragrahmen sein, damit entsprechend der Verwendung für unterschiedliche Fahrzeuge eine vereinfachte Lagerhaltung und darüber hinaus eine Verbindung dieser Teile auf dem Tragrahmen in einfacher Weise möglich wird.

Ebenso wie die Sitzlehne soll auch das Sitzunterteil gewichtsmäßig leicht ausgebildet sein, wozu in dem Schaumelement des Sitzunterteils eine Trägerstruktur eingebettet oder diese umspritzt angeordnet ist. Sie besteht aus einer Scharniere als Schwenklager aufweisenden ersten im Fahrzeug querverlaufenden Profilstrebe und sich hieran anschließende längsverlaufende Profilstreben, die endseitig mit einer parallel zur ersten querverlaufenden Profilstrebe angeordneten zweiten querverlaufenden Profilstrebe verbunden ist.

Damit bei einem Crash die Ladung hinter der Sitzlehne diese nicht aus der Verankerung reißen kann, ist nach der Erfindung des Weiteren vorgesehen, dass in der Obergurtstrebe des Tragrahmens eine Querschnittsschwächung oder eine Einkerbung vorgesehen ist. Hierdurch wird erreicht, dass sich die Sitzlehne gezielt verformen kann.

Weitere Einzelheiten der Erfindung sind in den Unteransprüchen gekennzeichnet.

Ausführungsbeispiele der Erfindung sind in den Zeichnungen dargestellt und werden im Folgenden näher beschrieben.

### Es zeigen

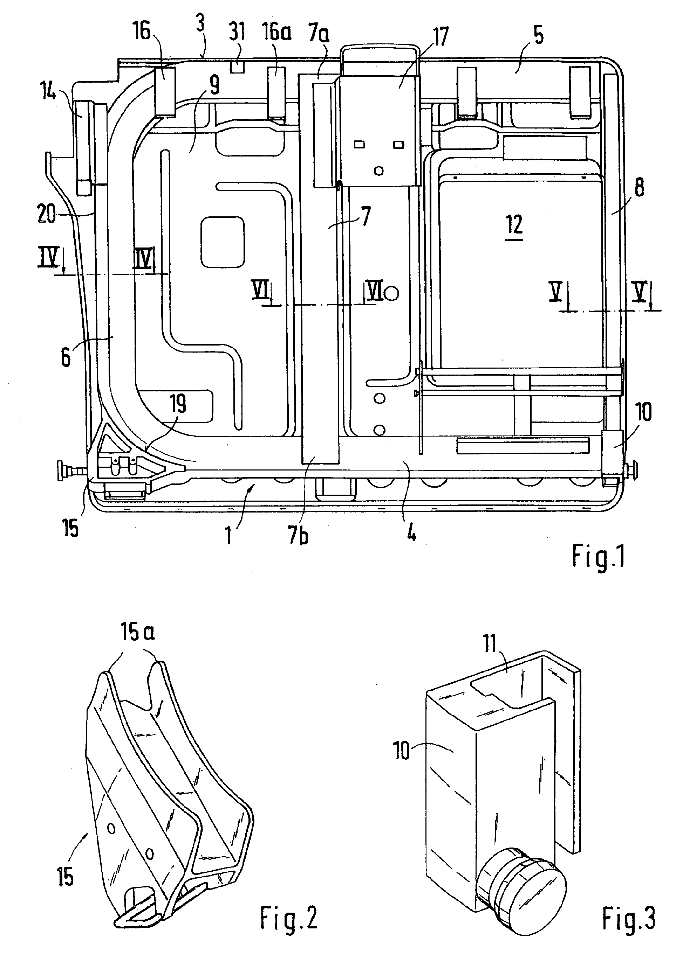

- Fig. 1: eine Draufsicht auf eine Rückenlehne eines Fahrzeugsitzes mit integriertem Tragrahmen und einem Lehnenstützblech,
- Fig. 2: eine schaubildliche Darstellung eines Anbauteils, wie eine Aufnahmeverriegelung,
- Fig. 3: eine schaubildliche Darstellung eines Anbauteils, wie eine Lageraufnahme,
- Fig. 4: einen Schnitt nach der Linie IV-IV der Fig. 1 durch eine Steggurtstrebe,
- Fig. 5: einen Schnitt nach der Linie V-V der Fig. 1 durch eine äußere Profilstrebe,
- Fig. 6: einen Schnitt nach der Linie VI-VI der Fig. 1 durch eine Mittenstrebe,
- Fig. 7: eine Draufsicht auf eine in einem Sitzunterteil eingebettete Trägerstruktur, wobei die Trägerstruktur sichtbar dargestellt ist,
- Fig. 8: eine schaubildliche Darstellung auf ein auf der Trägerstruktur verbundenes Scharnier,

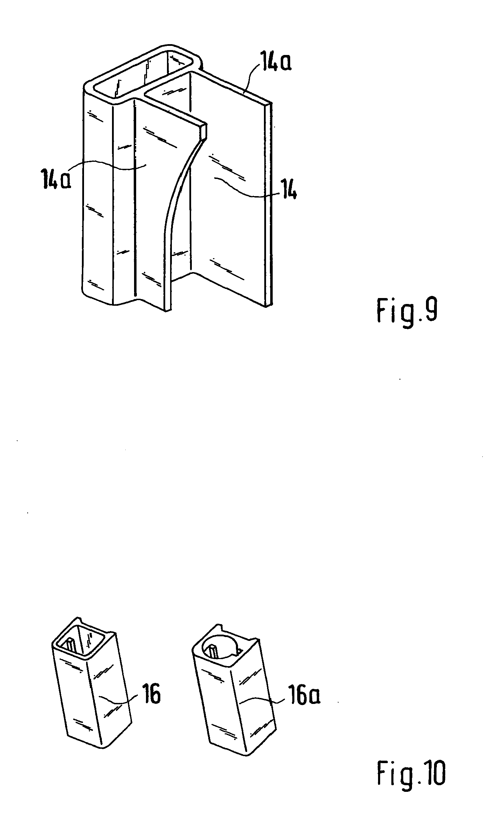

- Fig. 9: eine schaubildliche Darstellung auf ein Anbauteil, wie eine Verriegelungsaufnahme und
- Fig. 10: eine schaubildliche Darstellung auf Anbauteile, wie Aufnahmen für Haltestangen einer Kopfstütze.

Ein Sitz für ein Kraftfahrzeug, insbesondere ein Fondsitz besteht aus einer schwenkbaren Sitzlehne 1 und einem schwenkbaren Sitzunterteil 2. Die Sitzlehne 1 umfasst einen Tragrahmen 3, bestehend aus einer Unter- und Obergurtstrebe 4, 5 sowie einer Steggurtstrebe 6, einer Mittenstrebe 7 sowie einer äußeren Profilstrebe 8. Mit diesem Tragrahmen 3 ist ein Lehnenstützblech verbunden.

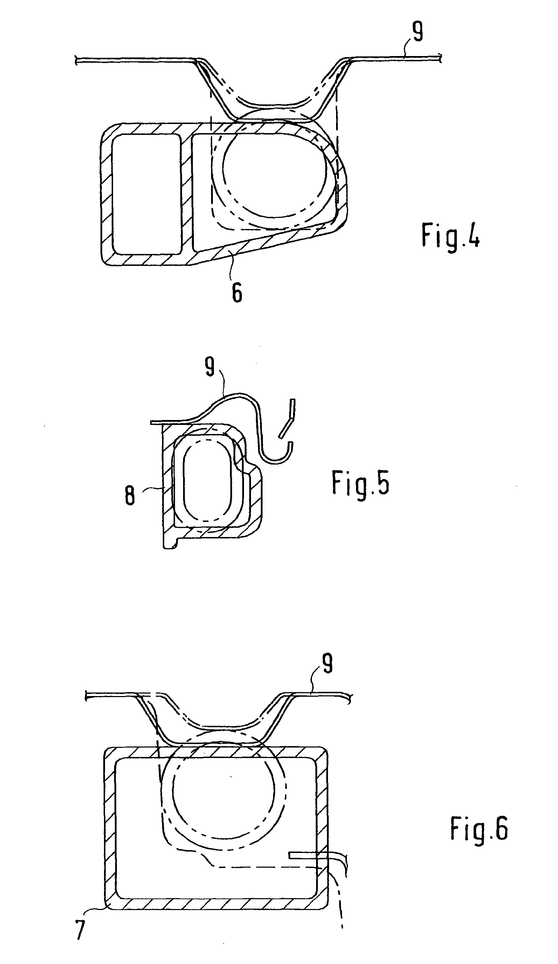

Der Tragrahmen 3 besteht aus einem Strangpressprofil gleichen Querschnitts und bildet eine U-Form mit der Untergurtstrebe 4 und der parallel hierzu angeordneten Obergurtstrebe 3 sowie der Steggurtstrebe 6. Diese Streben 3, 4 und 6 sind im Querschnitt etwa rechteckförmig als Zweikammerprofil ausgeführt, wie Fig. 4 näher zeigt. Mit den freien Enden der beiden Gurtstreben 3 und 4 ist die äußere Profilstrebe 8 verbunden, welche einen etwa quadratischen Querschnitt und im Querschnitt kleiner ausgelegt ist als die Gurtstreben 4 und 5. Die Mittenstrebe 7 ist im Querschnitt etwa rechteckförmig ausgebildet.

Die Mittenstrebe 7 weist Schenkel 7a, 7b auf, welche die Gurtstreben 4 und 5 von außen übergreifen. Die äußere Profilstrebe 8 ist mit der Untergurtstrebe 4 über ein Anbauteil, wie einem Lagerelement 10 verbunden, das eine Profilaufnahme 11 aufweist, in die das freie Ende der äußeren Profilstrebe 8 eingesteckt gehalten ist.

Das Lehnenstützblech 9 ist mit dem Tragrahmen 3 verschraubt verbunden und es weist eine Durchladeöffnung 12 sowie mehrere Einprägungen 13 zur Versteifung auf. Die Durchladeöffnung 12 wird von der äußeren Profilstrebe 8 begrenzt.

Mit dem Tragrahmen 3 sind verschiedene Anbauteile verbindbar, beispielsweise Verriegelungsaufnahmen 14, 15, Aufnahmen 16, 16a für Haltestangen einer Kopfstütze und Gurtumlenkbügel 17.

Die Verriegelungsaufnahmen 14, 15 bestehen aus einem Strangpressprofil und umgreifen mit Schenkeln 14a bzw. 15a die Gurtstreben 4, 5 und 6. Hierzu sind die stegseitigen Anlageflächen (Teil 15) entsprechend dem Verlauf bzw. der Ausrundung 19 bzw. mit einem geraden Bereich 20 (Teil 14) der Gurtstrebe ausgeführt und können sich hierdurch formschlüssig anlegen.

Die Obergurtstrebe 5 weist partiell eine Querschnittsverminderung auf, die aus einer Einkerbung 31 oder dgl. bestehen kann, damit bei einem Lastaufprall die Lagerungen bzw. Verriegelungen der Sitzlehne 1 nicht beschädigt werden, sondern die Sitzlehne 1 sich aus- bzw. wegbiegen kann.

Mit der Sitzlehne 1 ist ein Sitzunterteil 2 zusammengeführt, das über aufbauseitig gehaltene Scharniere 21 mit einer Tragstruktur 22 verbunden ist. Diese ist in das aus einem Schaumelement 23 gebildete Sitzunterteil 2 eingebettet bzw. ist von diesem Schaumelement umschäumt angeordnet.

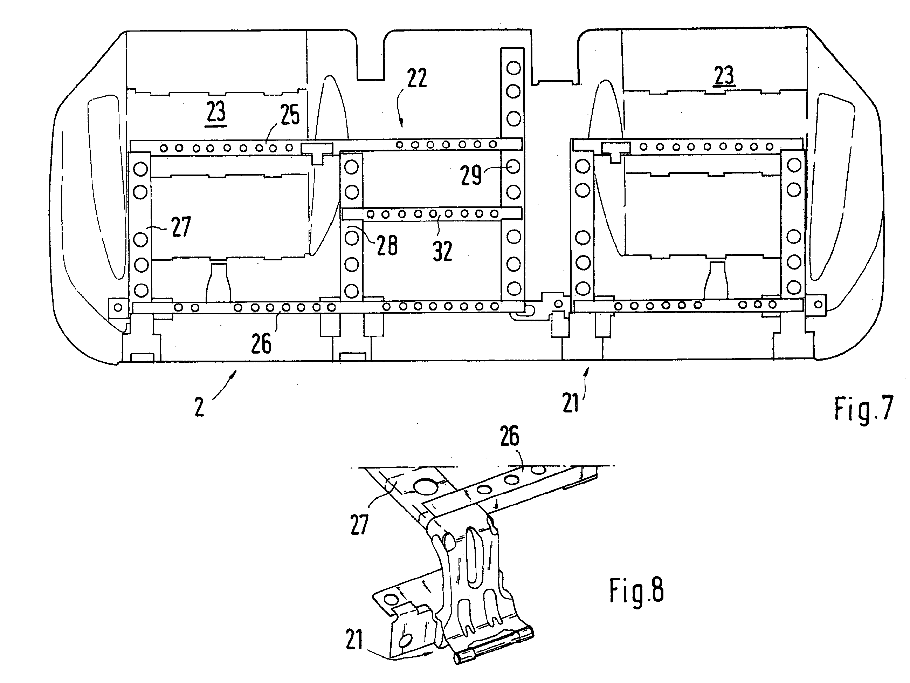

Zur besseren Darstellung der Tragstruktur 22 ist diese in Fig. 7 sichtbar gezeigt. Diese besteht im Wesentlichen aus quer im Fahrzeug verlaufenden parallel angeordneten Profilstreben 25, 26, die mit längsverlaufende Profilstreben 27, 28, 29 verbunden sind, wobei noch weitere Profilstreben zur Versteifung der Tragstruktur zwischensetzbar sind, wie beispielsweise die Profilstrebe 32. Zur Gewichtsverminderung sind die Profilstreben gelocht ausgeführt. Dieser Strebenverbund ergibt ein festigkeitsmäßig stabiles Stützgerüst für das Sitzunterteil 2.

## Patentansprüche

1. Sitz für ein Kraftfahrzeug, bestehend aus einem Sitzunterteil und einer schwenkbar angelenkten Sitzlehne, die aus Rahmenteilen zusammengesetzt ist und das Sitzunterteil aus einem verstärktem Schaumelement besteht, **dadurch gekennzeichnet, dass** die Sitzlehne (1) aus einem U-förmigen Tragrahmen (3) mit einem Lehnenstützblech (9) besteht und der Tragrahmen (3) ein Strangpressprofil gleichen Querschnitts mit einer Ober- und Untergurtstrebe (5, 4) sowie an einer Stirnseite eine verbindende Steggurtstrebe (6) umfasst und die freien beabstandeten Enden der Gurtstreben (4, 5) mit einer äußeren Profilstrebe (8) kleineren Querschnitts als der Tragrahmen (3) verbindbar sind und eine weitere Mittenstrebe (7) zwischen der Steggurtstrebe (6) und der Profilstrebe (8) angeordnet ist.

2. Sitz nach Anspruch 1, **dadurch gekennzeichnet, dass** das Lehnenstützblech (9) am Profil des Tragrahmens (3) anliegt und mit diesem verschraubt ist und das Lehnenstützblech (9) Einprägungen (13) aufweist und eine Durchladeöffnung (12) besitzt, die sich etwa zwischen der Mittenstrebe (7) und der äußeren Profilstrebe (8) erstreckt und von dieser begrenzt ist.

3. Sitz nach den Ansprüchen 1 oder 2, **dadurch gekennzeichnet, dass** mit dem Tragrahmen (3) Anbauteile verbunden sind, die aus Verriegelungsaufnahmen (14, 15) Aufnahmen (16, 16a) für Haltestangen von Kopfstützen und Gurtumlenkbügeln (17) bestehen, welche am Tragrahmen (3) befestigbar sind.

4. Sitz nach den Ansprüchen 1, 2 oder 3, **dadurch gekennzeichnet, dass** die Verriegelungsaufnahmen (14, 15) jeweils aus einem Strangpressprofil bestehen und mindestens eine Verriegelungsaufnahme (15) an einer ausgerundeten Ecke (19) des Tragrahmens (3) mit einer entsprechend korrespondierenden Ausrundung angesetzt ist und Schenkel (14a, 15a) der Verriegelungsaufnahmen (14, 15) das Profil des Tragrahmens (3) von außen haltend übergreifen.

5. Sitz nach den Ansprüchen 1, 2, 3 oder 4, **dadurch gekennzeichnet, dass** die Aufnahmen (16, 16a) für die Haltestangen auf eine Vorderfläche des Profils des Tragrahmens (3) aufsetzbar sind.

6. Sitz nach einem der vorhergehenden Ansprüche, **dadurch gekennzeichnet, dass** ein Aufnahmeelement (10) für ein mittiges Lager der Sitzlehne (1) am freien Ende der Untergurtstrebe (4) befestigt ist und die äußere Profilstrebe (8) mit ihrem unteren freien Ende in einer Profilaufnahme (11) einschiebbar gehalten ist.

7. Sitz nach einem der vorhergehenden Ansprüche, **dadurch gekennzeichnet, dass** in der Obergurtstrebe (5) eine Querschnittsschwächung oder eine Einkerbung (31) vorgesehen ist.

8. Sitz für ein Kraftfahrzeug, bestehend aus einem Sitzunterteil und einer schwenkbar angelenkten Sitzlehne, die aus Rahmenteilen zusammengesetzt ist und das Sitzunterteil aus einem verstärkten Schaumelement besteht, **dadurch gekennzeichnet, dass** in dem Schaumelement (23) das Sitzunterteil (2) eine Trägerstruktur (22) eingebettet oder umspritzt angeordnet ist, die aus einer Scharniere (21) als Schwenklager aufweisenden ersten im Fahrzeug querverlaufenden Profilstrebe (26) und sich hieran anschließende längsverlaufende Profilstreben (27, 28, 29) bestehen, die endseitig mit einer parallel zur ersten querverlaufenden Profilstrebe (26) angeordneten zweiten querverlaufenden Profilstrebe (25) verbunden ist.
